# EUROPÄISCHE PATENTANMELDUNG

(11) **EP 4 292 913 A1**
(43) Veröffentlichungstag der Anmeldung: **20.12.2023**
(21) Anmeldenummer: 23171600.2
(22) Anmeldetag: 04.05.2023
(51) Int. Cl.: B62D 55/24

(54) **KETTENLAUFWERK UND ZIVILES KETTENFAHRZEUG**

(30) Priorität: 15.06.2022 DE 102022206052
(71) Anmelder: Kässbohrer Geländefahrzeug AG, 88471 Laupheim (DE)
(72) Erfinder: Fink, Alexander, 89160 Dornstadt (DE); Hecht, Stefan, 88422 Tiefenbach (DE); Holder, Marius, 89584 Granheim (DE)
(74) Vertreter: Patentanwälte Ruff, Wilhelm, Beier, Dauster & Partner mbB

(57) **Zusammenfassung**

Ein Kettenlaufwerk (1) für ein Kettenfahrwerk (50) eines zivilen Kettenfahrzeugs (100), aufweisend eine Gummi-Endloskette (10), die umlaufend über ein endseitiges Antriebsrad (2), ein gegenüberliegendes Spannrad (3) sowie über mehrere Laufräder (4) geführt ist, wobei jedes der Laufräder (4) ein Untertrum (11) der Gummi-Endloskette (10) berührt, ist bekannt.

Erfindungsgemäß ist vorgesehen, dass wenigstens zwei der Laufräder (4) ein dem Untertrum (11) gegenüberliegendes Obertrum (12) der Gummi-Endloskette (10) berühren.

Einsatz in der Baubranche.

## Beschreibung

Die Erfindung betrifft ein Kettenlaufwerk für ein Kettenfahrwerk eines zivilen Kettenfahrzeugs, aufweisend eine Gummi-Endloskette, die umlaufend über ein endseitiges Antriebsrad, ein gegenüberliegendes Spannrad sowie über mehrere Laufräder geführt ist, wobei jedes der Laufräder ein Untertrum der Gummi-Endloskette berührt. Die Erfindung betrifft zudem ein ziviles Kettenfahrzeug mit einem Tragrahmen sowie mit einem Kettenfahrwerk, welches auf gegenüberliegenden Seiten des Tragrahmens jeweils ein derartiges Kettenlaufwerk aufweist.

Ein derartiges ziviles Kettenfahrzeug ist aus der WO 2013/029165 A1 bekannt. Das bekannte zivile Kettenfahrzeug weist einen Tragrahmen sowie ein Kettenfahrwerk auf, das auf gegenüberliegenden Seiten des Tragrahmens jeweils ein Kettenfahrwerk der eingangs genannten Art aufweist. Jedes dieser Kettenlaufwerke umfasst eine Gummi-Endloskette, die umlaufend über ein endseitiges Antriebsrad, ein gegenüberliegendes Spannrad sowie über mehrere Laufräder geführt ist. Dabei berührt bei dem bekannten Kettenlaufwerk jedes der Laufräder ein Untertrum der Endloskette. Jedes der Laufräder ist bei dem bekannten Kettenlaufwerk im Abstand zu einem dem Untertrum der Gummi-Endloskette gegenüberliegenden Obertrum der Endloskette angeordnet. Keines der Laufräder berührt bei dem bekannten Kettenlaufwerk das Obertrum. Ein Abstand zwischen Spannrad und Antriebsrad ist zum Justieren einer Kettenspannung der Gummi-Endloskette verstellbar. Das Obertrum ist dabei zwischen dem Spannrad und dem Antriebsrad schwingfähig aufgespannt oder aufgehängt. Eine Abstützung des Obertrums zwischen Antriebsrad und Spannrad ist nicht vorgesehen. Das Obertrum kann somit frei schwingen. Wird das Obertrum im Betrieb des Kettenlaufwerks durch Antriebsschwingungen oder/und Bodenunebenheiten zum Schwingen angeregt, kann dies schlimmstenfalls dazu führen, dass die Endloskette ihre Seitenführung verliert. So kann, wenn eine Amplitude der Schwingung zu groß wird, die Gummi-Endloskette seitlich vom Antriebsrad oder/und vom Spannrad rutschen. Dies führt zu einem Ausfall des Kettenlaufwerks. Um dem entgegenzuwirken, muss bei dem bekannten Kettenfahrwerk die Gummi-Endloskette vergleichsweise stark gespannt werden. Dadurch wird die Gummi-Endloskette aber mechanisch besonders belastet, was ihren Verschleiß fördert.

Aufgabe der Erfindung ist es, ein Kettenlaufwerk sowie ein ziviles Kettenfahrzeug der eingangs genannten Art zu schaffen, die gegenüber dem Stand der Technik verbesserte Eigenschaften aufweisen und insbesondere besonders zuverlässig sind. Insbesondere sollen eine Amplitude einer betriebsbedingten Schwingung des Obertrums und eine Kettenspannung reduziert werden.

Diese Aufgabe wird für das Kettenlaufwerk durch die Merkmale des Anspruchs 1 gelöst. Unter einer Gummi-Endloskette ist vorliegend ein Kettenband zu verstehen, das ein Gummimaterial umfasst und das nicht zerstörungsfrei trennbar ringförmig umläuft. Bei dem Gummimaterial kann es sich um einen Natur- oder/und einen Kunstkautschuk oder/und ein anderes geeignetes Elastomer handeln. Die Gummi-Endloskette kann als Gummi-Endlosriemen, insbesondere als Zahnriemen, aufgefasst werden. Die Gummi-Endloskette unterscheidet sich von einer herkömmlichen Gleiskette im Wesentlichen darin, dass die Gummi-Endloskette wenigstens nach außen hin keine Segmente oder Kettenglieder erkennen lässt. Ein Kettenschloss ist nicht vorhanden. Da das Obertrum bei dem erfindungsgemäßen Kettenlaufwerk auf wenigstens zwei der Laufräder aufliegt, sind keine oder nur vergleichsweise kurze Bereiche des Obertrums frei schwingend. Gegenüber dem voranstehend genannten bekannten Kettenlaufwerk ergeben sich somit beim erfindungsgemäßen Kettenlaufwerk um ein Vielfaches geringere Schwingungsamplituden. Selbst bei einer geringeren Kettenspannung lässt sich somit vermeiden, dass das Obertrum mit einer derart großen Amplitude zu schwingen beginnt, dass es zu einem Verlust der Seitenführung kommen kann. Einem seitlichen Abgleiten der Gummi-Endloskette vom Antriebsrad oder/und vom Spannrad wird somit selbst bei reduzierter Kettenspannung entgegengewirkt. Das erfindungsgemäße Kettenlaufwerk erweist sich demnach als besonders zuverlässig.

Zweckmäßig berühren mehr als zwei der Laufräder sowohl das Ober- als auch das Untertrum. Besonders zweckmäßig berühren alle der Laufräder sowohl das Ober- als auch das Untertrum. Je mehr der Laufräder sowohl das Ober- als auch das Untertrum berühren, desto kürzer fallen die frei schwingenden Bereiche des Obertrums aus. Entsprechend kann eine Kettenspannung mit steigender Anzahl der das Ober- und das Untertrum berührenden Laufräder weiter reduziert werden.

Zweckmäßig ist wenigstens eines der Laufräder im Abstand zum Obertrum angeordnet. Damit lässt sich nachfolgend erläuterter Zielkonflikt auf besonders kosteneffiziente Weise auflösen. Denn es ist herstellungs- und kostenseitig wünschenswert, alle Laufräder mit einheitlicher Größe auszuführen. Je größer ein Laufrad, desto aufwändiger und kostenintensiv seine Herstellung. Je kleiner ein Laufrad, desto kleiner müssen auch das Spann- oder/und das Antriebsrad sein, um einen Kontakt der wenigstens zwei Laufräder mit Ober- und Untertrum zu gewährleisten. Die Größe des Spann- oder/und des Laufrads ist aber limitiert durch einen zulässigen minimalen Biegeradius der Gummi-Endloskette. Indem eines der Laufräder im Abstand zum Obertrum angeordnet ist, kann eine Größe der Laufräder so gewählt werden, dass die wenigstens zwei der Laufräder - aber eben nicht alle Laufräder - den Kontakt zu Oberund Untertrum halten. Es ergibt sich ein besonders guter Kompromiss zwischen fahrbarer Kettenspannung, Sicherstellung der Seitenführung und Herstellungskosten der Laufräder. Bei dem im Abstand zum Obertrum angeordneten Laufrad kann es sich vorzugsweise um das dem Antriebsrad nächstgelegene Laufrad handeln. Vorteilhaft lässt sich somit bei Ausführung aller Laufräder in einheitlicher Größe das Antriebsrad in besonders großem Abstand vom Untergrund anordnen. Dies senkt eine Gefahr, dass das Antriebsrad beim Befahren von unebenem Gelände mit dem Untergrund in Kontakt kommt.

Bevorzugt weist die Gummi-Endloskette eine innenumfangsseitig umlaufende Innenverzahnung und das Antriebsrad eine außenumfangsseitig umlaufende Außenverzahnung auf, die zum formschlüssigen Antreiben der Gummi-Endloskette mit der Innenverzahnung kämmt. Somit lassen sich Antriebskräfte besonders effizient auf die Gummi-Endloskette und mittels der Gummi-Endloskette auf den Untergrund übertragen.

Zweckmäßig sind die Innenverzahnung und die Außenverzahnung geometrisch aufeinander abgestimmt. Die Innenverzahnung und die Außenverzahnung können einen gleichen Modul aufweisen. Eine Zahnhöhe der Außenverzahnung kann gleich einer Zahnhöhe der Innenverzahnung sein. Die Zahnhöhen von Außenverzahnung und Innenverzahnung können verschieden groß sein. Die Zahnhöhe der Außenverzahnung kann kleiner oder größer sein als die Zahnhöhe der Innenverzahnung. Eine dementsprechende geometrische Abstimmung ermöglicht einen besonders ruhigen und verschleißarmen Lauf der Gummi-Endloskette.

Zweckmäßig weist die Gummi-Endloskette einen ringförmigen Grundkörper auf, der entlang einer Umfangsrichtung endlos umlaufend ausgebildet ist. Endlos umlaufend bedeutet dabei, dass der Grundkörper frei von Stirnenden ist, die entlang der Umfangsrichtung miteinander verbunden werden müssen, um die Ringform zu schließen. Der Grundkörper ist kettenschlossfrei ausgebildet. Die Ringform des Grundkörpers lässt sich nicht zerstörungsfrei quer zur Umfangsrichtung trennen. Eine derartige Gummi-Endloskette erweist sich als besonders wartungsarm.

Zweckmäßig ist die Innenverzahnung an einem Innenumfang des Grundkörpers ausgebildet. Somit kann der Grundkörper um das Antriebsrad geschlungen werden, um eine besonders große Anzahl der Zähne der Außenverzahnung mit der Innenverzahnung in Eingriff zu bringen.

Zweckmäßig weist die Innenverzahnung eine Vielzahl entlang der Umfangsrichtung äquidistant zueinander angeordneter Zahnzwischenräume auf, die vom Innenumfang rückspringen. Es ergibt sich ein besonders flach bauendes Profil der Gummi-Endloskette.

In weiterer Ausgestaltung der Erfindung weist wenigstens eines der Laufräder eine außenseitige Ringprofilierung auf, die zur formschlüssigen Seitenführung der Gummi-Endloskette vorhanden ist. Die Ringprofilierung kann an einem Außenumfang des betreffenden Laufrads umlaufen. Dies hilft, einem seitlichen Herunterrutschen der Gummi-Endloskette von den Laufrädern entgegenzuwirken.

In weiterer Ausgestaltung der Erfindung weist die Innenverzahnung der Gummi-Endloskette eine Vielzahl von Spurbügeln auf, die entlang der Umfangsrichtung im Abstand zueinander angeordnet sind, die das Spannrad und das Antriebsrad jeweils außenseitig flankieren und die zur Seitenführung der Gummi-Endloskette in eine als Ringprofilierung dienende Ringnut der Laufräder eingreifen. Die in die Ringnut eingreifenden und Spann- wie Antriebsrad beidseits axial flankierenden Spurbügel bieten eine konstruktiv besonders einfach umzusetzende Möglichkeit für die formschlüssige Seitenführung der Gummi-Endloskette.

In weiterer Ausgestaltung der Erfindung ist entlang der Umfangsrichtung zwischen je zwei benachbarten Zahnzwischenräumen der Innenverzahnung ein Zahn der Innenverzahnung ausgebildet, der von Stegen jeweils eines Spurbügels flankiert ist. Eine Längsrichtung und eine Hochrichtung können eine Hochebene aufspannen. Die Hochrichtung kann entlang der Umfangsrichtung erstreckt sein. Die an einem der Zähne paarweise vorhandenen Stege können quer zur Umfangsrichtung, insbesondere quer zur Hochebene, im Abstand zueinander angeordnet sein. Der jeweilige Zahn kann quer zur Umfangsrichtung, insbesondere quer zur Hochebene, zwischen dem an ihm vorhandenen Paar an Stegen angeordnet sein. Eine derartige Endloskette baut, insbesondere quer zur Hochebene, besonders kompakt.

In weiterer Ausgestaltung der Erfindung durchbrechen die Zahnzwischenräume den Grundkörper entlang der Hochrichtung vollständig. Insbesondere durchbrechen die Zahnzwischenräume den Grundkörper entlang der Hochebene. Der Grundkörper kann von den Zahnzwischenräumen radial vollständig durchbrochen sein. Fremdstoffe wie Schmutz, die vom Innenumfang her in die Zahnzwischenräume gelangen, können somit direkt nach außen abgeführt werden und umgekehrt.

In weiterer Ausgestaltung der Erfindung umfasst der Grundkörper eine Elastomermatrix, insbesondere aus einem Gummimaterial. Das Gummimaterial kann wenigstens eine Gummimischung umfassen. Das Gummimaterial kann verschiedene Gummimischungen umfassen. Es können, insbesondere quer zur Hochebene, verschiedene Gummimischungen in verschiedenen Bereichen des Grundkörpers vorhanden sein. Das Gummimaterial kann wenigstens ein Ausgewähltes aus Natur- oder/und Kunstkautschuk oder/und einem anderen geeigneten Elastomer umfassen. Ein derartiger Grundkörper ist besonders beständig gegenüber einem Kontakt mit aggressiven Medien und ermöglich zudem einen besonders zuverlässigen Reibkontakt zwischen Untertrum und Untergrund.

In weiterer Ausgestaltung der Erfindung umfasst der Grundkörper eine Verstärkungseinrichtung zum Übertragen von Antriebskräften, die in der Elastomermatrix, insbesondere vollständig, eingebettet ist. Dies wirkt einem Versagen der Gummi-Endloskette, insbesondere einem Reißen quer zur Umfangsrichtung, entgegen.

Zweckmäßig umfasst die Verstärkungseinrichtung eine Vielzahl an Stahlkorden. Die Stahlkorde können entlang oder/und winklig zur Umfangsrichtung erstreckt sein. Alternativ oder zusätzlich kann die Verstärkungseinrichtung eine flächige Fasereinlage mit Verstärkungsfasern umfassen. Die Verstärkungsfasern können anorganische oder/und organische Fasern umfassen. Die Verstärkungsfasern können ausgewählt sein aus der Gruppe bestehend aus Glasfasern (d. h. Fasern aufweisend oder bestehend aus Glas), Basaltfasern (d. h. Fasern aufweisend oder bestehend aus Basalt), Borfasern (d. h. Fasern aufweisend oder bestehend aus Bor), Keramikfasern (d. h. Fasern aufweisend oder bestehend aus Keramik), Kieselsäurefasern (d. h. Fasern aufweisend oder bestehend aus Kieselsäure), Stahlfasern (d. h. Fasern aufweisend oder bestehend aus Stahl), Polyamidfasern (d. h. Faser aufweisend oder bestehend aus Polyamid), Aramidfasern (d. h. Fasern aufweisend oder bestehend aus Aramid), Kohlenstofffasern (d. h. Fasern aufweisend oder bestehend aus Kohlenstoff), Carbonfasern (d. h. Fasern aufweisend oder bestehend aus Carbon), Nylonfasern (d. h. Fasern aufweisend oder bestehend aus Nylon), Polyethylenfasern (d. h. Fasern aufweisend oder bestehend aus Polyethylen), Plexiglasfasern (d. h. Fasern aufweisend oder bestehend aus Plexiglas) und Mischungen von wenigstens zwei der vorgenannten Fasern. Bei der flächigen Fasereinlage kann es sich um ein Textil handeln. Insbesondere kann die flächige Fasereinlage ein Gelege, ein Gewebe, ein Gewirke, ein Gestrick oder ein Vlies oder eine Kombination wenigstens zweier der vorgenannten Textile sein. Es ergibt sich eine besonders widerstandsfähige Gummi-Endloskette.

In weiterer Ausgestaltung der Erfindung umfasst die Verstärkungseinrichtung eine Vielzahl an, insbesondere stählernen, Kernkörpern, die jeweils quer zur Umfangsrichtung erstreckt sind. Insbesondere sind die Kernkörper jeweils quer zur Hochebene erstreckt. Die Kernkörper steifen den Grundkörper vorteilhaft quer zur Umfangsrichtung, insbesondere quer zur Hochebene, aus. Eine Antriebskraft kann somit vorteilhaft auf der gesamten Breite der Gummi-Endloskette auf den Untergrund übertragen werden.

In weiterer Ausgestaltung der Erfindung sind die Kernkörper zueinander äquidistant entlang der Umfangsrichtung im Wechsel mit den Zahnzwischenräumen der Innenverzahnung angeordnet. Die Kernkörper sind also im Bereich der Zähne der Innenverzahnung vorhanden. Somit unterstützen sie die Kraftübertragung von der Außenverzahnung auf die Innenverzahnung.

In weiterer Ausgestaltung der Erfindung ist wenigstens eine Doppelachsanordnung vorhanden, die einen Achsträger und ein Laufradpaar mit zwei der Laufräder umfasst, wobei der Achsträger eine Aufhängungseinrichtung zur drehbeweglichen, insbesondere schwimmenden oder/und pendelnden, Verbindung der Doppelachsanordnung mit einem Tragrahmen des Kettenfahrzeugs aufweist und wobei die beiden Laufräder des Laufradpaars radial voneinander beabstandet jeweils an dem Achsträger drehbeweglich gelagert sind. Eine Unebenheit des überfahrenen Untergrunds lässt sich somit durch eine Schwenkbewegung des Achsträgers relativ zum Tragrahmen wenigstens teilweise ausgleichen.

In weiterer Ausgestaltung der Erfindung ist der Achsträger entlang der Längsrichtung zwischen einem ersten und einem zweiten Trägerende erstreckt und die Aufhängungseinrichtung, insbesondere mittig, zwischen den Trägerenden angeordnet, wobei in einem Bereich der Trägerenden jeweils eines der Laufräder des Laufradpaars relativ zum Achsträger drehbeweglich gelagert ist. Die Längsrichtung kann einer Erstreckung des Obertrums entsprechen. Die Hochrichtung kann senkrecht zur Längsrichtung orientiert sein. Die Hochrichtung kann entgegen einer Schwerkraftrichtung verlaufen. Es ergibt sich eine besonders große Laufruhe des Kettenlaufwerks beim Überfahren unebenen Untergrunds.

Bevorzugt sind zwei Doppelachsanordnungen vorhanden und entlang der Längsrichtung im Abstand zueinander angeordnet. Damit lässt sich die Laufruhe des Kettenlaufwerks noch weiter verbessern.

In weiterer Ausgestaltung der Erfindung ist wenigstens eines der Laufräder axial geteilt ausgebildet. Zum Montieren der Gummi-Endloskette, die ja quer zu ihrer Umfangsrichtung nicht geöffnet werden kann, kann somit das wenigstens eine Laufrad geteilt werden, um die Gummi-Endloskette aufzuziehen. Nach dem Aufziehen der Gummi-Endloskette kann das geteilt ausgebildete Laufrad zusammengesetzt werden, um die formschlüssige Seitenführung der Gummi-Endloskette auszubilden.

Für das zivile Kettenfahrzeug der eingangs genannten Art wird die der Erfindung zugrunde liegende Aufgabe durch die Merkmale des Anspruchs 18 gelöst.

Ein erfindungsgemäßes ziviles Kettenfahrzeug ist insbesondere zur Verwendung auf einer Baustelle eingerichtet und weist einen Tragrahmen sowie ein Kettenfahrwerk auf, das auf gegenüberliegenden Seiten des Tragrahmens jeweils ein erfindungsgemäßes Kettenlaufwerk gemäß der voranstehenden Beschreibung aufweist. Die voranstehend genannten Vorteile des erfindungsgemäßen Kettenlaufwerks übertragen sich daher mutatis mutandis auch auf das zivile Kettenfahrzeug gemäß der Erfindung.

In weiterer Ausgestaltung der Erfindung ist auf dem Tragrahmen eine Aufbaustruktur angeordnet, wobei auf der Aufbaustruktur oder in einer Fahrzeuglängsrichtung versetzt zur Aufbaustruktur auf dem Tragrahmen ein Fahrerhaus angeordnet ist, wobei die Aufbaustruktur um wenigstens eine Aufbau-Drehachse kippbar oder/und drehbar relativ zu dem Tragrahmen gelagert ist. Die Aufbaustruktur kann also entweder relativ zum Fahrerhaus oder mitsamt dem Fahrerhaus gedreht oder/und gekippt werden. Die Aufbaustruktur kann eine Kippmulde oder/und einen Aufbaurahmen umfassen. Alternativ oder zusätzlich kann die Aufbaustruktur wenigstens ein Ausgewähltes aus einem Kofferaufbau oder/und einer Pritsche oder/und einem Tank umfassen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

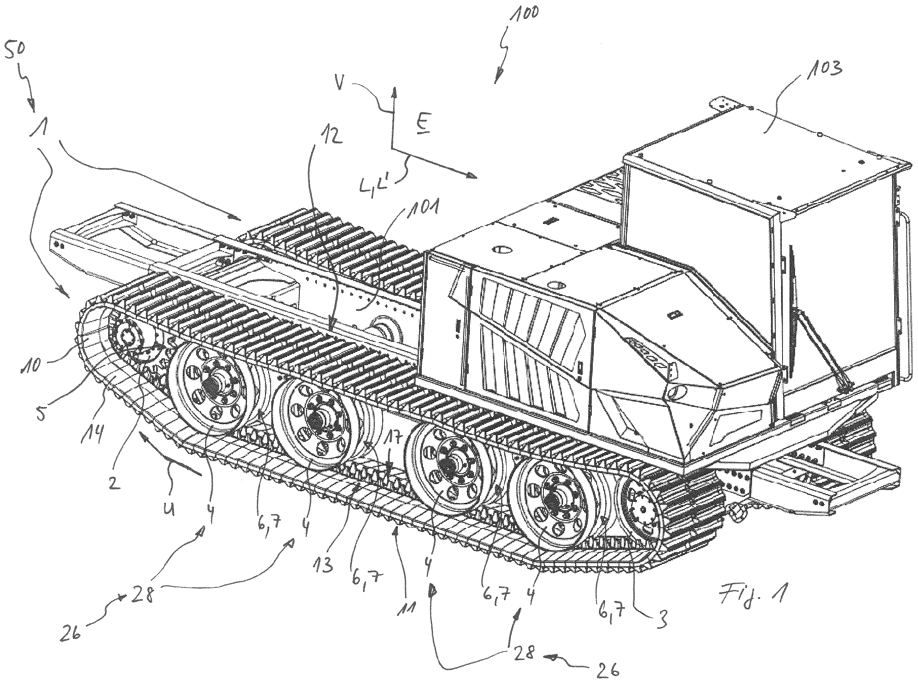

- Fig. 1: zeigt in einer schematischen Perspektivdarstellung eine Ausführungsform eines erfindungsgemäßen zivilen Kettenfahrzeugs mit einer Ausführungsform eines erfindungsgemäßen Kettenlaufwerks, wobei eine Aufbaustruktur des zivilen Kettenfahrzeugs zur besseren Übersichtlichkeit ausgeblendet ist,
- Fig. 2: in einer schematischen Seitendarstellung das zivile Kettenfahrzeug nach Fig. 1 mit eingeblendeter Aufbaustruktur,

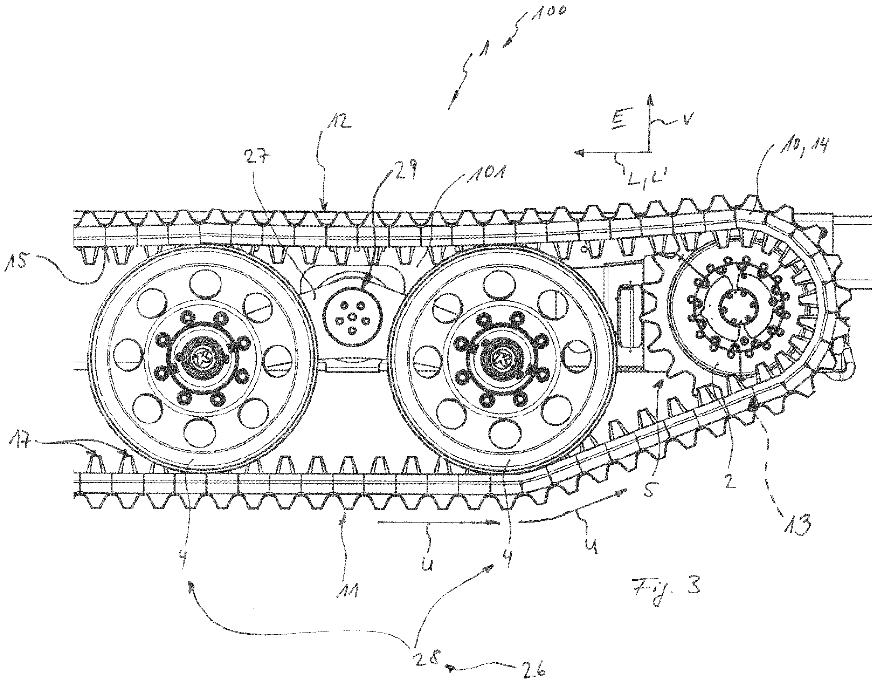

- Fig. 3: ein Detail der Darstellung nach Fig. 2,

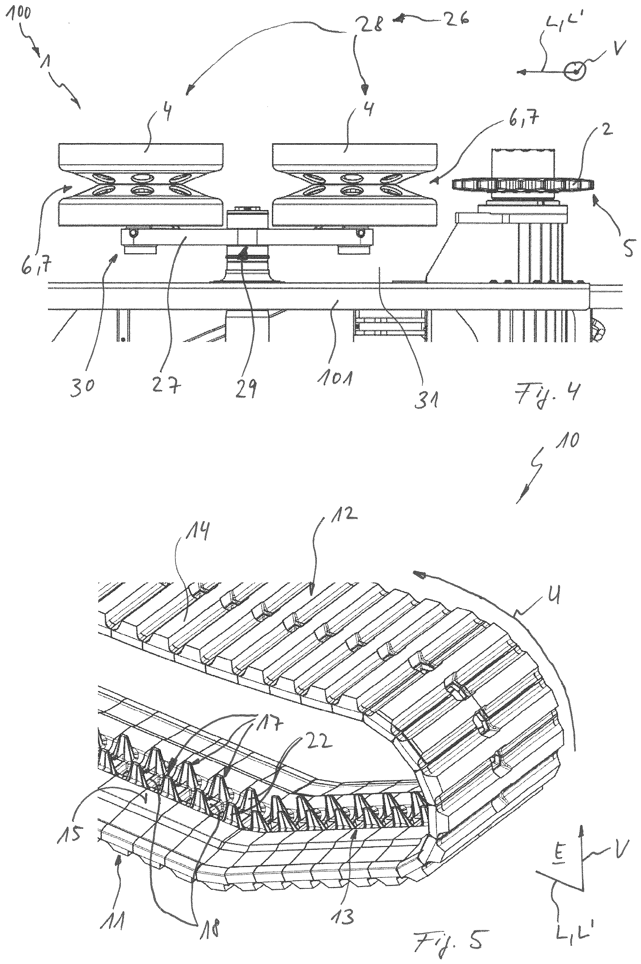

- Fig. 4: in einer schematischen Draufsicht ein Detail des zivilen Kettenfahrzeugs nach den Fig. 1 bis 3, wobei eine Gummi-Endloskette zur besseren Übersichtlichkeit ausgeblendet ist,
- Fig. 5: ein Detail einer schematischen Perspektivdarstellung der Gummi-Endloskette für des zivilen Kettenfahrzeugs nach den Fig. 1 bis 4,
- Fig. 6: eine schematische Perspektivdarstellung eines Abschnitts der Gummi-Endloskette nach Fig. 5,
- Fig. 7: eine schematische Draufsicht des Abschnitts nach Fig. 6,
- Fig. 8: eine schematische Schnittdarstellung der Gummi-Endloskette nach den Fig. 5 bis 7,
- Fig. 9: eine schematische Untersicht des Abschnitts nach den Fig. 6 und 7, und

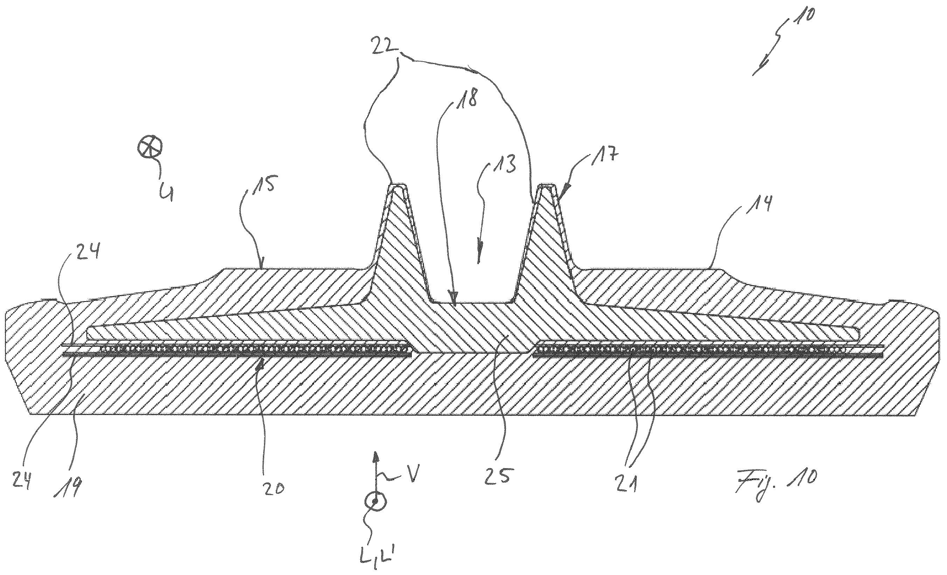

- Fig. 10: eine weitere schematische Schnittdarstellung der Gummi-Endloskette nach den Fig. 5 bis 9.

Ein erfindungsgemäßes Kettenfahrzeug 100 kann zur Verwendung auf einer Baustelle dienen. Es weist einen Tragrahmen 101 sowie ein Kettenfahrwerk 50 auf. Das Kettenfahrwerk 50 umfasst zwei erfindungsgemäße Kettenlaufwerke 1. Jeweils eines der Kettenlaufwerke 1 ist auf einander gegenüberliegenden Seiten des Tragrahmens 101 angeordnet.

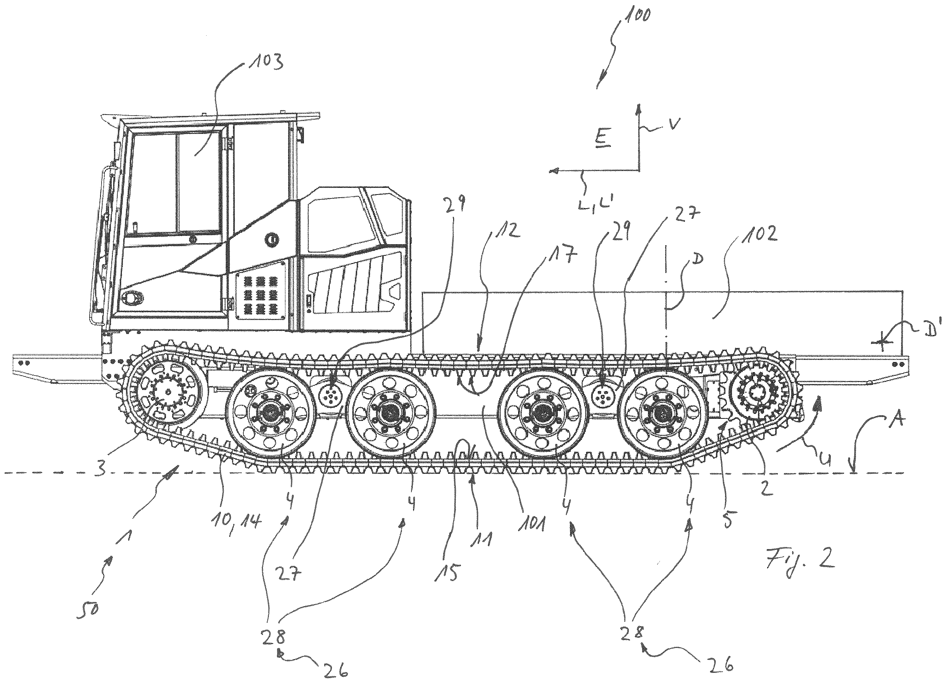

Das Kettenlaufwerk 1 für das Kettenfahrwerk 50 des zivilen Kettenfahrzeugs 100 weist eine Gummi-Endloskette 10 auf. Die Gummi-Endloskette 10 umfasst einen Gummiwerkstoff. Der Gummiwerkstoff kann einen Natur- oder/und einen Kunstkautschuk oder/und ein anderes geeignetes Elastomer umfassen. Das Kettenlaufwerk 1 umfasst ein endseitig angeordnetes Antriebsrad 2 sowie ein gegenüberliegendes Spannrad 3. Die Gummi-Endloskette 10 ist umlaufend über das endseitige Antriebsrad 2, das gegenüberliegende Spannrad 3 sowie über mehrere Laufräder 4 geführt. Antriebsrad 2 und Spannrad 3 liegen einander entlang einer Längsrichtung L gegenüber. Durch ein Verstellen eines Abstands zwischen Spannrad 3 und Antriebsrad 2 lässt sich eine Kettenspannung der Gummi-Endloskette 10 justieren. Die Laufräder 4 sind entlang der Längsrichtung L zwischen dem Antriebsrad 2 und dem Spannrad 3 angeordnet. Vorliegend sind vier Laufräder 4 vorhanden. Jedes der Laufräder 4 berührt ein Untertrum 11 der Gummi-Endloskette 10. Mit dem Untertrum 11 kann das Kettenlaufwerk 1 in Kontakt mit einem Untergrund A stehen. Der Untergrund A kann ein Boden oder/und eine Fahrbahn sein. Durch den Kontakt des Untertrums 11 mit dem Untergrund A können Fahrkräfte zwischen dem Untergrund A und dem Kettenlaufwerk 1 übertragen werden. Wenigstens zwei der Laufräder 4 berühren ein dem Untertrum 11 gegenüberliegendes Obertrum 12 der Gummi-Endloskette 10. Das Obertrum 12 liegt dem Untertrum 11 entlang einer Hochrichtung V gegenüber. Die Hochrichtung V kann entgegengesetzt zu einer Schwerkraftrichtung verlaufen. Beispielsweise berühren wenigstens zwei der Laufräder 4 das Obertrum 12, wenn das Kettenlaufwerk 1 auf einem ebenen Untergrund A steht, vgl. Fig. 2. Vorliegend berühren alle der Laufräder 4 das Obertrum 12. Beispielsweise können alle der Laufräder 4 in dem auf dem ebenen Untergrund A stehenden Zustand des Kettenlaufwerks 1 das Obertrum berühren. Das Kettenlaufwerk 1 ist vorliegend frei von Stützrollen zur Führung des Obertrums 12, die im Abstand zum Untertrum 11 angeordnet sind. Alternativ zu der gezeigten Ausführungsform kann wenigstens eines der Laufräder 4 im Abstand zum Obertrum 12 angeordnet sein. Beispielsweise kann das zum Antriebsrad nächstgelegene Laufrad 4 im Abstand zum Obertrum angeordnet sein.

Die Gummi-Endloskette 10 weist eine innenumfangsseitig umlaufende Innenverzahnung 13 auf. Das Antriebsrad 2 weist eine außenumfangsseitig umlaufende Außenverzahnung 5 auf. Die Außenverzahnung 5 kämmt zum formschlüssigen Antreiben der Gummi-Endloskette 10 mit der Innenverzahnung 13. Die Innen- und die Außenverzahnung 13, 5 sind geometrisch aufeinander abgestimmt. Beispielsweise weisen die Innenverzahnung 13 und die Außenverzahnung 5 einen gleichen Modul auf. Eine Zahnhöhe der Außenverzahnung 5 kann auf die Zahnhöhe der Innenverzahnung 13 abgestimmt sein. Beispielsweise können die Zahnhöhen der Innen- und der Außenverzahnung 13, 5 gleich oder unterschiedlich groß sein. Vorliegend ist die Zahnhöhe der Außenverzahnung 5 größer als die Zahnhöhe der Innenverzahnung 13. Es versteht sich, dass umgekehrt auch die Innenverzahnung 13 eine größere Zahnhöhe aufweisen kann als die Außenverzahnung 5.

Die Gummi-Endloskette 10 weist einen ringförmigen Grundkörper 14 auf. Der Grundkörper 14 ist entlang der Umfangsrichtung U endlos umlaufend ausgebildet. Das bedeutet, dass der Grundkörper 14 entlang der Umfangsrichtung U frei von Stirnenden ist, die zum Schließen seiner Ringform miteinander verbunden werden müssen. Die Gummi-Endloskette 10 kann kettenschlossfrei ausgebildet sein. Der ringförmige Grundkörper 14 ist fugenlos zusammenhängend ausgebildet. Der Grundkörper 14 ist segmentfrei ausgebildet.

Vorliegend ist die Innenverzahnung 13 an einem Innenumfang 15 des Grundkörpers 14 ausgebildet. Die Innenverzahnung 13 umfasst eine Vielzahl an Zahnzwischenräumen 16. Die Zahnzwischenräume 16 sind entlang der Umfangsrichtung U äquidistant zueinander angeordnet. Die Zahnzwischenräume 16 springen von dem Innenumfang 15 zurück. Wenigstens eines der Laufräder 4 - vorliegend jedes der Laufräder 4 - weist eine außenseitige Ringprofilierung 6 auf. Die Ringprofilierung 6 kann am jeweiligen Laufrad 4 außenumfangsseitig vorhanden sein. Die Ringprofilierung 6 ist zur formschlüssigen Seitenführung der Gummi-Endloskette 10 vorhanden.

Die Innenverzahnung 15 weist vorliegend eine Vielzahl an Spurbügeln 17 auf. Die Spurbügel 17 sind entlang der Umfangsrichtung U im Abstand zueinander angeordnet. Sie flankieren das Spannrad 3 und das Antriebsrad 2 jeweils außen- oder stirnseitig. Die Spurbügel 17 greifen zur Seitenführung der Gummi-Endloskette 10 in eine als Ringprofilierung 6 dienende Ringnut der Laufräder 4. Vorliegend ist die Ringprofilierung 6 jedes der Laufräder 4 durch eine solche Ringnut 7 ausgebildet. Entlang der Umfangsrichtung U ist zwischen je zwei benachbarten Zahnzwischenräumen 16 der Innenverzahnung 13 ein Zahn 18 der Innenverzahnung ausgebildet. Dieser Zahn 18 ist von Stegen 22 jeweils eines Spurbügels 17 flankiert. Die Längsrichtung L und die Hochrichtung V spannen eine Hochebene E auf. Die Hochebene E ist also entlang der Längsrichtung L und der Hochrichtung V erstreckt. Die Zähne 18 sind vorliegend senkrecht zur Hochebene E zwischen den Stegen 22 angeordnet. An jedem der Zähne 18 sind also zwei Stege 22 vorhanden, die quer zur Umfangsrichtung U im Abstand zueinander angeordnet sind. An jedem der Zähne 18 sind beispielsweise zwei Stege 22 angeordnet, die senkrecht zur Hochebene E im Abstand zueinander angeordnet sind. Es sind also vorliegend zwei entlang der Umfangsrichtung U parallel zueinander verlaufende Reihen an Stegen 22 vorhanden.

Die Zahnzwischenräume 16 durchbrechen vorliegend den Grundkörper 14 entlang der Hochrichtung V vollständig. Die Zahnzwischenräume 16 können den Grundkörper 14 entlang der Hochebene E durchbrechen. Die Zahnzwischenräume 16 können den Grundkörper 14 radial vollständig durchbrechen. Da die Zahnhöhe der Außenverzahnung 5 vorliegend größer ist als die Zahnhöhe der Innenverzahnung 15, können die Zähne der Außenverzahnung 5 durch die Zahnzwischenräume 16 hindurch teilweise nach außen ragen. Die den Grundkörper 14 durchbrechenden Zahnzwischenräume 16 können mittels einer perforierten oder perforationsfreien Membran aus einem Material des Grundkörpers verschlossen sein, die bei Inbetriebnahme des Kettenlaufwerks 1 durch die Außenverzahnung 5 durchstoßen werden kann.

Der Grundkörper 14 weist vorliegend eine Elastomermatrix 19 auf. Die Elastomermatrix 19 kann ein Gummimaterial umfassen oder aus einem Gummimaterial bestehen. Das Gummimaterial kann wenigstens ein Ausgewähltes aus Natur- oder/und Kunstkautschuk oder/und einem anderen geeigneten Elastomer umfassen. Der Grundkörper 14 umfasst außerdem eine Verstärkungseinrichtung 20 zum Übertragen von Antriebskräften. Die Verstärkungseinrichtung 20 ist in der Elastomermatrix 19 eingebettet. Vorliegend ist die Verstärkungseinrichtung 20 vollständig in der Elastomermatrix 19 eingebettet. Das bedeutet, dass die Verstärkungseinrichtung 20 an allen Seiten von der Elastomermatrix 19 umgeben ist. Bei der Inbetriebnahme des Kettenlaufwerks 1 kann die Elastomermatrix 19 bereichsweise durchtrennt werden, so dass dann die Verstärkungseinrichtung 20 nur noch teilweise von der Elastomermatrix 19 umgeben ist.

Die Verstärkungseinrichtung 20 umfasst vorliegend eine Vielzahl an Stahlkorden 21. Die Stahlkorde 21 sind entlang der Umfangsrichtung U, beispielsweise umlaufend, erstreckt. Alternativ oder zusätzlich kann eine Vielzahl weiterer Stahlkorde 21 vorhanden sein, die winklig zu der Umfangsrichtung U erstreckt sind. Beispielsweise können diese Stahlkorde 21 zwischen zwei einander gegenüberliegenden Flanken der Gummi-Endloskette 10 erstreckt sein. Die Verstärkungseinrichtung 20 umfasst vorliegend außerdem eine flächige Fasereinlage 24. Die flächige Fasereinlage 24 umfasst Verstärkungsfasern. Die Verstärkungsfasern können ausgewählt sein aus der Gruppe bestehend aus Glasfasern (d. h. Fasern aufweisend oder bestehend aus Glas), Basaltfasern (d. h. Fasern aufweisend oder bestehend aus Basalt), Borfasern (d. h. Fasern aufweisend oder bestehend aus Bor), Keramikfasern (d. h. Fasern aufweisend oder bestehend aus Keramik), Kieselsäurefasern (d. h. Fasern aufweisend oder bestehend aus Kieselsäure), Stahlfasern (d. h. Fasern aufweisend oder bestehend aus Stahl), Polyamidfasern (d. h. Faser aufweisend oder bestehend aus Polyamid), Aramidfasern (d. h. Fasern aufweisend oder bestehend aus Aramid), Kohlenstofffasern (d. h. Fasern aufweisend oder bestehend aus Kohlenstoff), Carbonfasern (d. h. Fasern aufweisend oder bestehend aus Carbon), Nylonfasern (d. h. Fasern aufweisend oder bestehend aus Nylon), Polyethylenfasern (d. h. Fasern aufweisend oder bestehend aus Polyethylen), Plexiglasfasern (d. h. Fasern aufweisend oder bestehend aus Plexiglas) und Mischungen von wenigstens zwei der vorgenannten Fasern. Bei der flächigen Fasereinlage 24 kann es sich um ein Textil handeln. Bei der flächigen Fasereinlage 24 kann es sich um ein Gelege oder/und ein Gewebe oder/und ein Gewirke oder/und ein Gestrick oder/und ein Vlies oder eine Kombination daraus handeln.

Die Verstärkungseinrichtung 20 umfasst vorliegend außerdem eine Vielzahl an Kernkörpern 25. Die Kernkörper 25 können einen metallischen Werkstoff umfassen oder aus einem metallischen Werkstoff bestehen. Bei dem metallischen Werkstoff kann es sich um eine Stahllegierung handeln. Die Kernkörper 25 sind jeweils quer zur Umfangsrichtung U erstreckt. Vorliegend sind die Kernkörper 25 senkrecht zur Hochebene E erstreckt. Die Kernkörper 25 sind zueinander äquidistant entlang der Umfangsrichtung U im Wechsel mit den Zahnzwischenräumen 16 der Innenverzahnung 15 angeordnet. Die Kernkörper 25 können somit Kerne der Zähne 18 ausbilden. Vorliegend weist jeder Zahn 18 einen durch einen der Kernkörper 25 ausgebildeten Kern auf. Die Kernkörper 25 können Kerne der Spurbügel 17, insbesondere der Stege 22, ausbilden.

Das Kettenlaufwerk 1 umfasst eine Doppelachsanordnung 26. Die Doppelachsanordnung 26 weist einen Achsträger 27 sowie ein Laufradpaar 28 mit zwei der Laufräder 4 auf. Der Achsträger 27 umfasst eine Aufhängungseinrichtung 29 zur drehbeweglichen Verbindung der Doppelachsanordnung 26 mit einem Tragrahmen 101 des Kettenfahrzeugs 100. Der Achsträger 27 kann beispielsweise schwimmend oder/und pendelnd mittels seiner Aufhängungseinrichtung 29 mit dem Tragrahmen 101 verbunden werden. Die beiden Laufräder 4 des Laufradpaars 28 sind radial voneinander beabstandet jeweils an dem Achsträger 27 drehbeweglich gelagert. Der Achsträger 27 erstreckt sich entlang der Längsrichtung L zwischen einem ersten und einem zweiten Trägerende 30, 31. Die Aufhängungseinrichtung 19 ist, beispielsweise mittig, zwischen den Trägerenden 30, 31 angeordnet. Dabei ist in einem Bereich der Trägerenden 30, 31 jeweils eines der Laufräder 4 des Laufradpaars 28 relativ zum Achsträger 27 drehbeweglich gelagert. Vorliegend sind je Kettenlaufwerk 1 zwei derartige Doppelachsanordnungen 26 vorhanden. Die beiden Doppelachsanordnungen 26 des Kettenlaufwerks 1 sind dabei entlang der Längsrichtung L im Abstand zueinander angeordnet. Das Antriebsrad 2 ist entlang der Längsrichtung L im Abstand zum ihm nächstgelegenen Laufrad 4 angeordnet. Alternativ können das Antriebsrad 2 und das ihm nächstgelegene Laufrad 4 einander entlang der Längsrichtung L bereichsweise überschneiden. Das Antriebsrad 2 kann dann mit der Ringnut 7 des ihm nächstgelegenen Laufrads 4 kämmen. Eine derartige, zur vorliegenden Ausführungsform alternative, kämmende Ausführung ist in den Figuren nicht gezeigt.

Beispielsweise ist wenigstens eines der Laufräder 4 axial geteilt ausgebildet. Vorliegend ist jedes der Laufräder 4 axial geteilt ausgebildet. Das Antriebsrad 2 kann wenigstens zwei Segmente - vorliegend sind drei solcher Segmente vorhanden - aufweisen, die radial lösbar miteinander verbunden sind.

Das zivile Kettenfahrzeug 100 weist vorliegend eine Aufbaustruktur 102 auf. Die Aufbaustruktur 102 ist auf dem Tragrahmen 101 angeordnet. Die Aufbaustruktur 102 kann einen Aufbaurahmen umfassen. Die Aufbaustruktur 102 kann eine Kippmulde umfassen. Die Aufbaustruktur 102 kann einen Kofferaufbau umfassen. Die Aufbaustruktur 102 kann eine Pritsche umfassen. Die Aufbaustruktur 102 kann einen Tank umfassen. Vorliegend umfasst das zivile Kettenfahrzeug 100 ein Fahrerhaus 103. Das Fahrerhaus 103 ist dabei in Fahrzeuglängsrichtung L' versetzt zur Aufbaustruktur 102 auf dem Tragrahmen 101 angeordnet. Alternativ zur gezeigten Ausführungsform kann das Fahrerhaus 103 auf der Aufbaustruktur 102 angeordnet sein. Die Aufbaustruktur 102 ist um wenigstens eine Aufbau-Drehachse D, D' kippbar oder/und drehbar relativ zu dem Tragrahmen 101 gelagert. Vorliegend ist die Aufbaustruktur 102 relativ zum Tragrahmen 101 um eine erste Aufbau-Drehachse D drehbar und um eine zweite Aufbau-Drehachse D' kippbar gelagert. Die erste Aufbau-Drehachse D verläuft entlang der Hochrichtung V. Die zweite Aufbau-Drehachse D' verläuft vorliegend entlang der Fahrzeuglängsrichtung L'. Die Längsrichtung L des Kettenlaufwerks 1 kann der Fahrzeuglängsrichtung L' entsprechen.

Bei der gezeigten Ausführungsform ist die Aufbaustruktur 102 relativ zum Fahrerhaus 103 drehbar. Ist das Fahrerhaus 103 auf der Aufbaustruktur 102 angeordnet - in den Figuren nicht gezeigt - so kann die Aufbaustruktur samt dem Fahrerhaus 103 relativ zum Tragrahmen 101, insbesondere um die vertikal orientierte Drehachse D, gedreht werden.

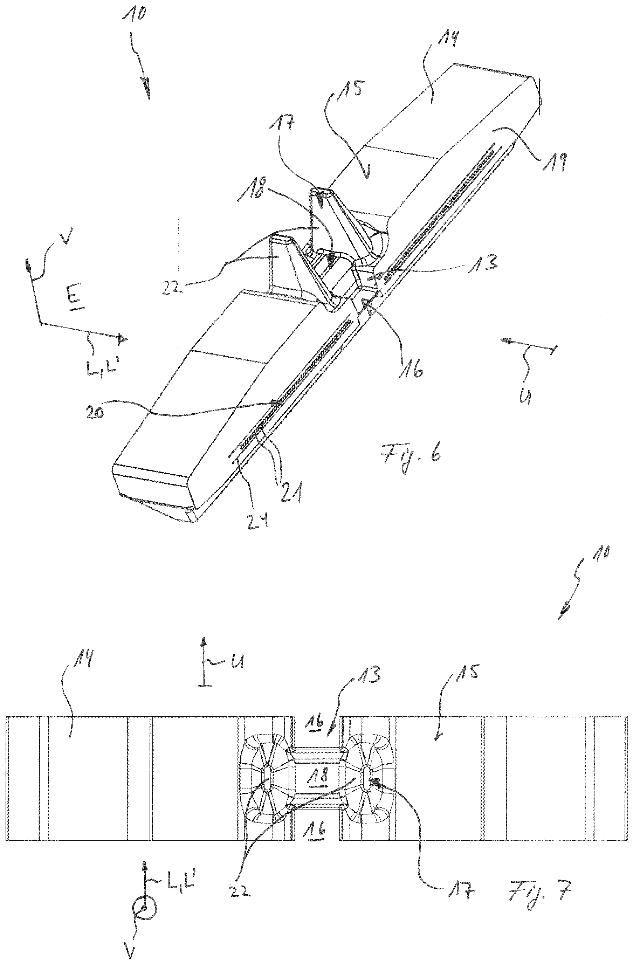

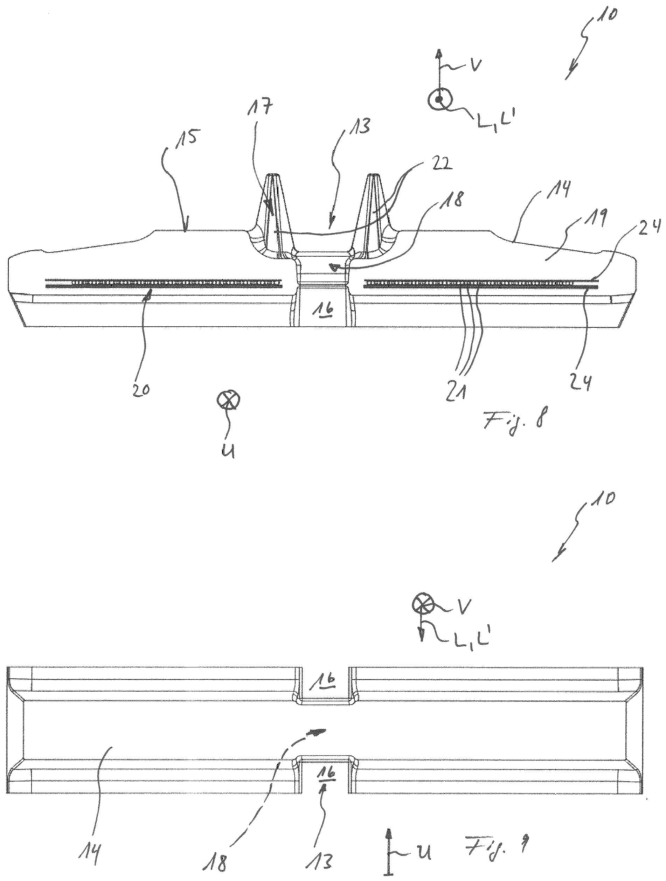

Die Gummi-Endloskette 10 umfasst eine Vielzahl gleichartiger Abschnitte, von welchen jeder dem in den Fig. 6, 7 und 9 gezeigten Abschnitt entspricht. Die Abschnitte sind entlang der Umfangsrichtung integral aneinander ausgeformt. Die Abschnitte sind materialeinheitlich miteinander verbunden.

## Patentansprüche

1. Kettenlaufwerk (1) für ein Kettenfahrwerk (50) eines zivilen Kettenfahrzeugs (100) aufweisend
eine Gummi-Endloskette (10), die umlaufend über ein endseitiges Antriebsrad (2), ein gegenüberliegendes Spannrad (3) sowie über mehrere Laufräder (4) geführt ist, wobei jedes der Laufräder (4) ein Untertrum (11) der Gummi-Endloskette (10) berührt,
**dadurch gekennzeichnet, dass** die Gummi-Endloskette (10) einen ringförmigen Grundkörper (14) aufweist, der entlang einer Umfangsrichtung (U) endlos umlaufend und fugenlos zusammenhängend sowie segmentfrei ausgebildet ist, und dass
wenigstens zwei der Laufräder (4), insbesondere wenigstens in einem auf einem ebenen Untergrund (A) stehenden Zustand des Kettenlaufwerks(1), ein dem Untertrum (11) gegenüberliegendes Obertrum (12) der Gummi-Endloskette (10) berühren.

2. Kettenlaufwerk (1) nach Anspruch 1, **dadurch gekennzeichnet, dass** wenigstens eines der Laufräder (4) eine außenseitige Ringprofilierung (6) aufweist, die zur formschlüssigen Seitenführung der Gummi-Endloskette (10) vorhanden ist.

3. Kettenlaufwerk (1) nach Anspruch 1 oder 2, **dadurch gekennzeichnet, dass** eine Innenverzahnung (15) der Gummi-Endloskette (10) eine Vielzahl von Spurbügeln (17) aufweist, die entlang einer Umfangsrichtung (U) im Abstand zueinander angeordnet sind, die das Spannrad (3) und das Antriebsrad (2) jeweils außenseitig flankieren und die zur Seitenführung der Gummi-Endloskette (10) in eine als Ringprofilierung (6) dienende Ringnut (7) der Laufräder (4) eingreifen.

4. Kettenlaufwerk (1) nach Anspruch 3, **dadurch gekennzeichnet, dass** entlang der Umfangsrichtung (U) zwischen je zwei benachbarten Zahnzwischenräumen (16) der Innenverzahnung (13) ein Zahn (18) der Innenverzahnung (13) ausgebildet ist, der von Stegen (22) jeweils eines Spurbügels (17) flankiert ist.

5. Kettenlaufwerk (1) nach einem der vorhergehenden Ansprüche, **dadurch gekennzeichnet, dass** die Zahnzwischenräume (16) einen Grundkörper (14) der Gummi-Endloskette (10) entlang einer Hochrichtung (V) vollständig durchbrechen.

6. Kettenlaufwerk (1) nach einem der vorhergehenden Ansprüche, **dadurch gekennzeichnet, dass** der Grundkörper (14) eine Elastomermatrix (19), insbesondere aus einem Gummimaterial, umfasst.

7. Kettenlaufwerk (1) nach Anspruch 6, **dadurch gekennzeichnet, dass** der Grundkörper (14) eine Verstärkungseinrichtung (20) zum Übertragen von Antriebskräften umfasst, die in der Elastomermatrix (19), insbesondere vollständig, eingebettet ist.

8. Kettenlaufwerk (1) nach Anspruch 7, **dadurch gekennzeichnet, dass** die Verstärkungseinrichtung (20) eine Vielzahl an, insbesondere stählernen, Kernkörpern (25) umfasst, die jeweils quer zur Umfangsrichtung (U) erstreckt sind.

9. Kettenlaufwerk (1) nach Anspruch 7 oder 8, **dadurch gekennzeichnet, dass** die Kernkörper (25) zueinander äquidistant entlang der Umfangsrichtung (U) im Wechsel mit den Zahnzwischenräumen (16) der Innenverzahnung (15) angeordnet sind.

10. Kettenlaufwerk (1) nach einem der vorhergehenden Ansprüche, **dadurch gekennzeichnet, dass** wenigstens eine Doppelachsanordnung (26) vorhanden ist, die einen Achsträger (27) und ein Laufradpaar (28) mit zwei der Laufräder (4) umfasst, wobei der Achsträger (27) eine Aufhängungseinrichtung (29) zur drehbeweglichen Verbindung der Doppelachsanordnung (26) mit einem Tragrahmen (101) des Kettenfahrzeugs (100) aufweist und wobei die beiden Laufräder (4) des Laufradpaars (28) radial voneinander beabstandet jeweils an dem Achsträger (27) drehbeweglich gelagert sind.

11. Kettenlaufwerk (1) nach Anspruch 10, **dadurch gekennzeichnet, dass** der Achsträger (27) entlang der Längsrichtung (L) des Kettenlaufwerks (1) zwischen einem ersten und einem zweiten Trägerende (30, 31) erstreckt ist und die Aufhängungseinrichtung (19), insbesondere mittig, zwischen den Trägerenden (30, 31) angeordnet ist, wobei in einem Bereich der Trägerenden (30, 31) jeweils eines der Laufräder (4) des Laufradpaars (28) relativ zum Achsträger (27) drehbeweglich gelagert ist.

12. Kettenlaufwerk (1) nach einem der vorhergehenden Ansprüche, **dadurch gekennzeichnet, dass** wenigstens eines der Laufräder (4) axial geteilt ausgebildet ist.

13. Ziviles Kettenfahrzeug (100), insbesondere zur Verwendung auf einer Baustelle, aufweisend einen Tragrahmen (101) sowie ein Kettenfahrwerk (50), das auf gegenüberliegenden Seiten des Tragrahmens (101) jeweils ein Kettenlaufwerk (1) nach einem der vorhergehenden Ansprüche aufweist.

14. Ziviles Kettenfahrzeug (100) nach Anspruch 13, **dadurch gekennzeichnet, dass** auf dem Tragrahmen (101) eine Aufbaustruktur (102) angeordnet ist, wobei auf der Aufbaustruktur (102) oder in Fahrzeuglängsrichtung (L`) versetzt zur Aufbaustruktur (102) auf dem Tragrahmen (101) ein Fahrerhaus (103) angeordnet ist, wobei die Aufbaustruktur (102) um wenigstens eine Aufbau-Drehachse (D, D') kippbar oder/und drehbar relativ zu dem Tragrahmen (101) gelagert ist.
